# EUROPEAN PATENT APPLICATION

(11) **EP 2 461 127 A2**
(43) Date of publication of application: **06.06.2012**
(21) Application number: 11191750.6
(22) Date of filing: 02.12.2011
(51) Int. Cl.: F28D 7/16, F28F 9/00, F04D 29/42, F24F 12/00

(54) **A tubular heat exchanger**

(30) Priority: 03.12.2010 GB 201020520; 08.12.2010 GB 201020785
(71) Applicant: Vent-Axia Group Limited, Crawley, West Sussex RH10 9YX (GB)
(72) Inventor: Saunders, Alan John, Angmering, West Sussex BN16 4JZ (GB); Cottingham, Neil Douglas, Arundel, Sussex BN18 9ES (GB)
(74) Representative: Locke, Andrew Robert

(57) **Abstract**

A tubular heat exchanger (1) for mounting in a bore of a building, the heat exchanger (1) comprising a tubular outer casing (3) and a fan housing (2), at least one heat exchanger element (11) being provided within the tubular outer casing(3).

The tubular outer casing (3) and heat exchanger element (11) are arranged to define a supply fluid channel and an exhaust fluid channel.

The fan housing (2) is mounted at one end of the tubular outer casing (3) and is provided with two impellers (29, 31), one impeller (31) being operative to force supply fluid through the supply fluid channel and the other impeller (29) being operative to force exhaust fluid through the exhaust fluid channel such that heat is recovered from the exhaust fluid into the supply fluid.

The fan housing (2) is movably mounted on the tubular outer casing (3) by a mechanical joint (41) operative such that the fan housing (2) may be moved relative to the tubular outer casing (3) whilst remaining sealingly connected thereto. This enables the relative position of the fan housing (2) and tubular outer casing (3) to be adjusted to allow for the bore in the building not being perpendicular to the wall of the building against which the fan housing (2) is mounted.

## Description

The present invention relates to a tubular heat exchanger and particularly but not exclusively relates to a tubular heat exchanger for use as a single room heat recovery unit in a room of a building.

We have previously proposed a tubular heat exchanger arranged to be mounted in a bore through a wall of a building. Such a tubular heat exchanger is described in our UK patent application GB 0718216.5 and comprises a tubular outer casing in which is mounted a plurality of heat exchanger elements in the form of smaller diameter heat exchanger tubes. These tubes may be arranged in a stack of parallel tubes. The tubular outer casing is received in the bore in the building. A fan housing is provided at one end of the tubular outer casing and this contains two impellers, which may be driven from a single motor using a single motor output shaft.

In use, the air flow through the heat exchanger tubes is kept separate from the air flow through the tubular outer casing around the heat exchanger tubes. Thus one impeller pumps supply air into the building through the heat exchanger tubes, whilst the other impeller pumps exhaust air from the building through the tubular outer casing. During this process heat is recovered from the exhaust air and transferred to the supply air.

Such a heat exchanger is suitable for use as a single room heat recovery unit designed to fit in, for example, a 100mm diameter bore through a wall in a domestic property.

Such a heat exchanger is intended principally for use in the refurbishment market although it can equally be used in a newly built property. It will be in the nature of its use that it is fitted as a replacement for an extractor fan unit which has come to the end of its life. Thus the bore through the wall may already exist and this may, or may not, be exactly orthogonal to the internal surface of the wall inside the building. If a new bore has to be cut this also may not be orthogonal to the wall.

The present invention stems from some work in trying to provide an improved heat exchanger which allows for an inexactly cut bore in the wall of the building.

According to a first aspect of the invention there is provided a tubular heat exchanger for mounting in a bore of a building, the heat exchanger comprising a tubular outer casing and a fan housing, at least one heat exchanger element being provided within the tubular outer casing, the tubular outer casing and heat exchanger element being arranged to define a supply fluid channel and an exhaust fluid channel, the fan housing being mounted at one end of the tubular outer casing and being provided with two impellers, one impeller being operative to force supply fluid through the supply fluid channel and the other impeller being operative to force exhaust fluid through the exhaust fluid channel such that heat is recovered from the exhaust fluid into the supply fluid, the fan housing being movably mounted on the tubular outer casing by a mechanical joint operative such that the fan housing may be moved relative to the tubular outer casing whilst remaining sealingly connected thereto.

This may allow the relative position of the fan housing and tubular outer casing to be altered such that when the tubular outer casing is mounted in the bore of the building, the fan housing can be moved if required so as to be flush with the wall of the building.

Preferably the mechanical joint comprises a ball joint comprising a curved socket in which a curved ball is received.

Preferably the socket is defined by a curved concave inner surface of the fan housing, the inner surface extending about the longitudinal axis of the tubular heat exchanger, the curved ball being defined by a convex radially outer surface of one end of the tubular outer casing.

Preferably the concave inner surface and the convex outer surface are curved in three dimensions, that is, about the longitudinal axis of the heat exchanger, and also about axes perpendicular to the longitudinal axis.

Preferably the concave inner surface and the convex outer surface each comprise part of a respective sphere.

Preferably a seal is provided at the mechanical joint, the seal being arranged to provide a fluid seal between the supply fluid channel and the exhaust fluid channel, at the mechanical joint.

Preferably the seal comprises a first seal element mounted on the socket and a second seal element mounted on the ball of the mechanical ball joint.

Preferably each seal element comprises a respective sealing disc mounted on the ball and socket of the joint.

Preferably the first seal element comprises a concave curved profile that mates with a convex curved profile on the second seal element.

Each seal element may be co-moulded with the joint so as to be integral therewith. Each seal element may alternatively comprise a separate component subsequently mounted on the joint.

Preferably the end of the tubular outer casing projects into the fan housing which comprises a supply fluid chamber axially spaced from an exhaust fluid chamber, the tubular outer casing projecting through one chamber into the other, the seal comprising a primary seal provided at the interface between the tubular outer casing and both chambers.

Preferably the seal further comprises a secondary seal provided at the interface between the tubular outer casing and one chamber, the primary seal being spaced from the secondary seal along the longitudinal axis of the heat exchanger.

Preferably the impellers are mounted in the fan housing such that their rotational axes are offset from the longitudinal axis of the outer tubular casing, when the heat exchanger is viewed end on, that is, along its longitudinal axis.

Preferably at least one impeller overlaps the end of the outer tubular casing, when the heat exchanger is viewed from the side.

Preferably the impellers are driven from a common motor and share a common rotational axis, the motor being mounted between the two impellers and comprising a drive shaft that projects from each side of the motor, each impeller being mounted on respective sides of the drive shaft.

Preferably at least one impeller comprises a hollow hub, the motor being located within the hollow hub such that the blades of at least one impeller overlap the motor, when the heat exchanger is viewed from the side.

Preferably each impeller comprises a radial impeller, each impeller comprising an axial inlet and a radial outlet.

The heat exchanger element may comprise an elongate heat exchanger tube extending through the interior of the tubular outer casing, the heat exchanger tube comprising one of the supply fluid channel and an exhaust fluid channel.

Preferably a plurality of heat exchanger tubes are provided. The tubes may be arranged in a stacked formation.

Preferably the tubes are thin walled ducts formed from a flexible plastics material.

Other aspects of the present invention may include any combination of the features or limitations referred to herein.

The present invention may be carried into practice in various ways, but embodiments will now be described by way of example only with reference to the accompanying drawings in which:

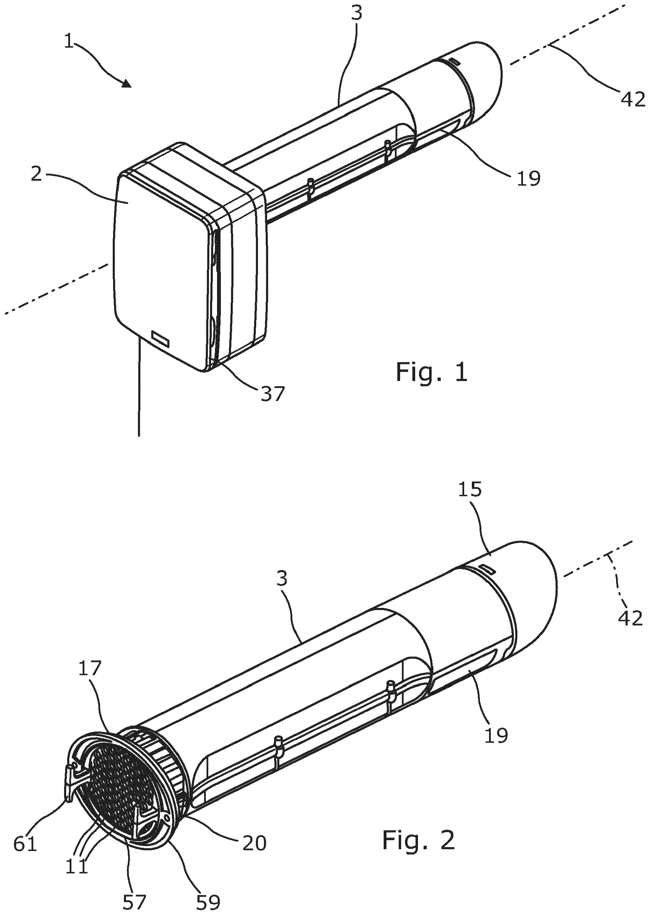

Figure 1 is a perspective view of a tubular heat exchanger in accordance with the present invention;
Figure 2 is a perspective view of a tubular outer casing comprising part of the tubular heat exchanger of Figure 1;

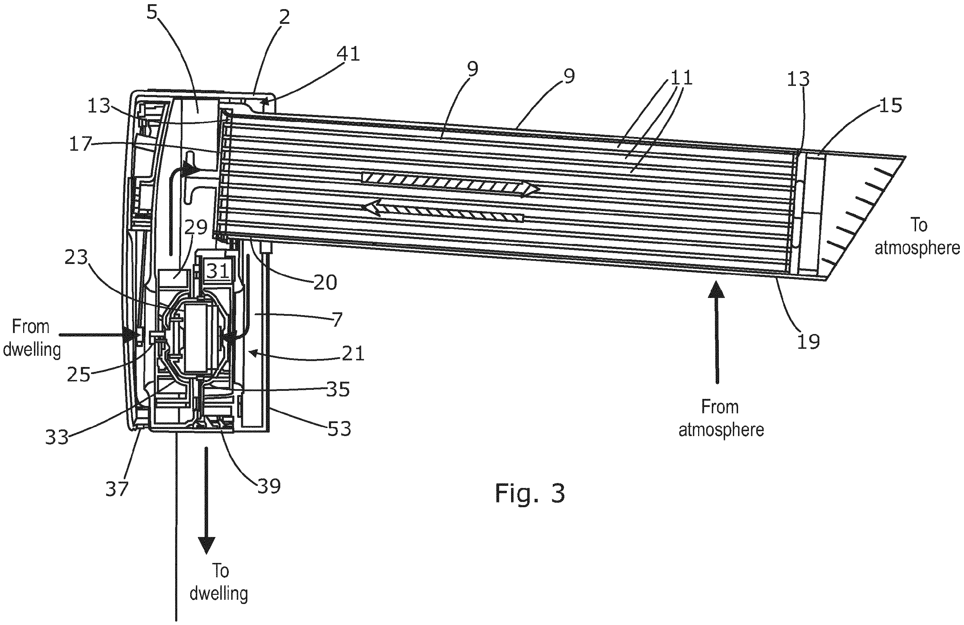

Figure 3 is a sectional side view of the tubular heat exchanger of Figures 1 and 2;
Figure 4 is a schematic sectional side view of the tubular heat exchanger of Figures 1 to 3, mounted in a bore in a wall of a building; and

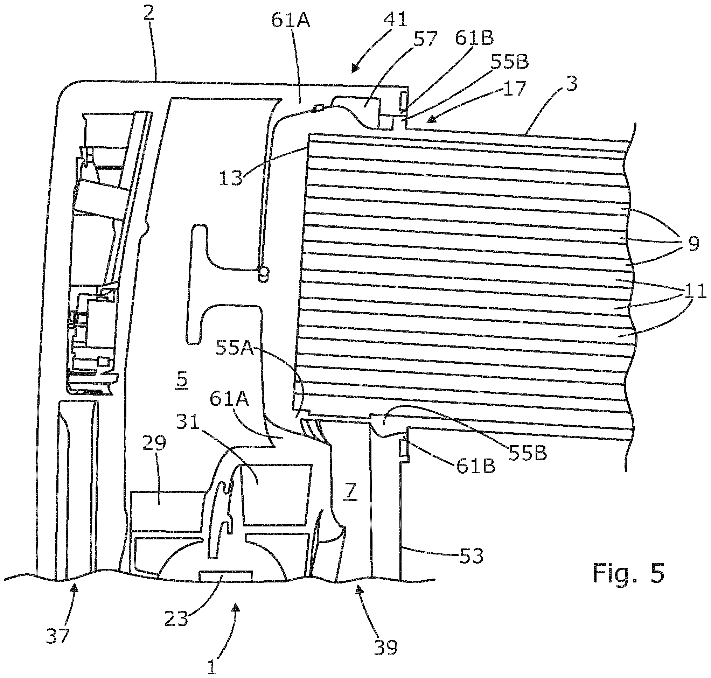

Figure 5 is an enlarged sectional side view of part of the tubular heat exchanger of Figures 1 to 4.

A tubular heat exchanger 1 comprises an oblong fan housing 2 mounted on one end of a tubular outer casing 3.

The fan housing 2 comprises two chambers being an exhaust fluid chamber 5 and a supply fluid chamber 7. The end of the tubular outer casing 3 projects into the fan housing 2 through the supply fluid chamber 5 and terminates in the exhaust fluid chamber 5.

The tubular outer casing 3 comprises a hollow internal cavity 9 through which a plurality of heat exchanger elements in the form of elongate heat exchanger tubes 11 extend. The tubes 11 are mounted on a pair of sealing end plates 13 mounted at each end of the outer casing 3. Each tube 11 is a thin walled duct of a flexible plastics material. Each end plate 13 comprises a plurality of stepped diameter bores into which the ends of the tubes 11 are inserted. Thus, each bore has a first diameter portion into which the tubes 11 are received, and a smaller diameter portion against which the end of the tube 11 abuts.

The tubes 13 define an exhaust air channel having an exhaust air outlet at the distal end 15 of the casing 3 and an exhaust air inlet 14 at the inner end 17 of the casing 3 in communication with the exhaust air chamber 5 in the fan housing 2.

The space around the tubes 13, within the internal cavity 9, define a supply air channel between a supply air inlet 19 in the outer wall of the distal end 15 of the outer casing 3 and a supply air outlet 20 in the outer wall of the inner end 17 of the outer casing, the supply air outlet 20 being within the supply air chamber 7 of the fan housing 2.

The fan housing 2 is provided with a fan assembly 21 comprising a common motor 23 having a common output shaft 25, that projects from each side of the motor 23 and on which are mounted impellers 29, 31, one being located in the exhaust air chamber 5, the other being located in the supply air chamber 7.

Each impeller 29, 31 has a hollow hub 33, 35 that extends around a respective end of the motor 23 such that the blades of inlet impeller 31 partially overlap with the motor 23 when the heat exchanger is viewed from the side.

The exhaust impeller 29 in use draws air into the exhaust chamber 5 through an inlet 37 defined as a slit between the sides and the front panel of the fan housing 2. The exhaust air is drawn into the impeller 29 itself in an axial direction, and expelled into the exhaust chamber 5 in a radial direction. The impeller 29 forces the expelled exhaust air into and through the heat exchange tubes 13.

The supply impeller 31 draws air into the supply chamber 7 from the cavity 9 in the outer casing and axially into the supply impeller 31. The supply air exits the supply impeller 31 radially and is pumped into the building via an outlet 39 formed in the base wall of the fan housing 2.

Heat is recovered from the exhaust air into the supply air by heat exchange within the casing of the outer casing 3, that is between the air in cavity 9 and the air in the heat exchanger tubes 11.

The fan housing 2 is movably mounted on the inner end 17 of the tubular casing 3 such that the fan housing 2 may be moved relative to the tubular casing 3 whilst remaining sealingly connected thereto.

This is achieved by way of a mechanical joint between the fan housing 2 and outer casing 3, and by way of a seal between the fan housing 2 and outer casing 3, the seal allowing movement between the two components.

The mechanical joint is a ball and socket type joint 41 comprising a concave socket part on the fan housing 2 and a convex ball part on the outer casing 3. The socket part may be provided on the outer casing 3 with the ball part on the fan housing 2.

In this example, the inner end 17 of the tubular casing 3 is provided with a convex formation 55 that extends around the periphery of the casing 3. The convex formation 55 comprises a first portion 55A at the end of the casing 3 and a second portion 55B axially spaced from the first portion 55A along the casing 3 so as to define a recess 57 therebetween.

The convex formation 55 is curved in three dimensions so as to comprise part of a sphere, indicated by dashed lines 59. Thus the convex formation 55 is curved when viewed along the longitudinal axis 42, and from any other direction.

The inside part of the fan housing 2 that receives the inner end 17 of the tubular casing 3 is formed with the concave formation 61. This mirrors the three dimensional spherical curved convex formation 55 and thus comprises a first portion 61A at an inner side of the supply air chamber 7 and an axially spaced second portion 61B at the rear wall 53 of the fan housing 2.

The convex formation 55 thus comprises part of the ball of joint 41 and the concave formation 61 part of the socket of joint 41. This enables the tubular casing 3 to be moved up and down, left and right, and rotated about axis 42, relative to fan housing 2. This enables the angle of the plane of back wall 53 of housing 2 to be adjusted relative to longitudinal casing axis 42.

The joint 41 allows rotation of the fan housing 2 relative to the outer casing 3 about the longitudinal axis 42 of the casing 3, and also allows the fan housing 2 to be inclined about a horizontal transverse axis (when the heat exchanger is viewed from the end), and/or tilted about a vertical transverse axis (when the heat exchanger is viewed from above), relative to the casing 3, that is, about axes perpendicular to the longitudinal axis of the casing 3.

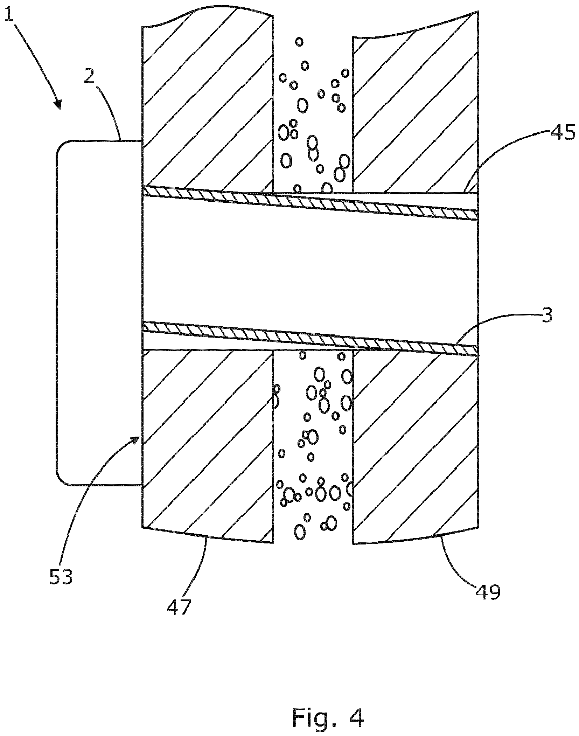

Thus as can best be seen with reference to Figure 4, if a bore 45 through the walls 47, 49 of a building is not cut orthogonal to the plane of the inner wall 51 of the building, the joint 41 allows the position of the fan housing 2 to be adjusted relative to the outer casing 3, such that the rear wall 53 of the fan housing 2 is flush with the inner wall 51.

To ensure that the exhaust and supply chambers 5, 7 of the fan housing 2 remain sealed from one another, a seal 63 is provided at the ball joint 41.

The seal 55 comprises four disc like seal elements arranged in pairs. The first pair of seal elements comprises a sealing disc mounted on the first portion 55A of joint 41, the disc comprising a curved convex outer periphery that matches the shape of the first portion 55A.

The first pair of sealing elements further comprises a sealing ring mounted on the concave formation 61 of joint 41 inside the fan housing 2. The sealing ring comprises a curved concave radially inner surface against which the outer periphery of the sealing disc seals. The engagement of the disc with the ring forms a flexible fluid seal between the exhaust and supply chambers 5, 7 of the fan housing 2 that enables the relative movement described above between the fan housing 2 and the outer casing 3.

The second pair of seal elements are provided at the interface between the outer casing 3 and the rear wall 53 of the fan housing 2 to form a fluid seal between the outer casing 3 and the supply fluid chamber 7.

The second pair of seal elements comprise a sealing disc and a sealing ring as described above with reference to the disc and ring.

The ball joint mounted fan housing 2 enables any discrepancy in the angle of the bore cut in the wall of the building to be accounted for by moving the fan housing 2 accordingly so that the rear wall 53 is always flush with the inner wall 51 of the building. This enables the fan housing 2, which is in view inside the building, to remain aesthetically pleasing, and also minimises any air gap between the fan housing 2 and the building.

The fan assembly 21 is offset from the longitudinal axis 42 of the outer casing 3 when viewed end on, and this, together with the placing of the motor 23 partially within the hub 33, 35 of each impeller 29, 31 enables the fan housing 2 to be relatively compact when the heat exchanger 1 is viewed from the side.

In addition, to facilitate cleaning of the heat exchanger 1, the spherical seal 63 is easily removable by the end user.

## Claims

1. A tubular heat exchanger (1) for mounting in a bore of a building, the heat exchanger (1) comprising a tubular outer casing (3) and a fan housing (2), at least one heat exchanger element (11) being provided within the tubular outer casing (3), the tubular outer casing (3) and heat exchanger element (11) being arranged to define a supply fluid channel and an exhaust fluid channel, the fan housing (2) being mounted at one end of the tubular outer casing (3) and being provided with two impellers (29, 31), one impeller (31) being operative to force supply fluid through the supply fluid channel and the other impeller (29) being operative to force exhaust fluid through the exhaust fluid channel such that heat is recovered from the exhaust fluid into the supply fluid, the fan housing (2) being movably mounted on the tubular outer casing (3) by a mechanical joint (41) operative such that the fan housing (2) may be moved relative to the tubular outer casing (3) whilst remaining sealingly connected thereto.

2. The tubular heat exchanger (1) of claim 1 arranged to allow the relative position of the fan housing (2) and tubular outer casing (3) to be altered such that when the tubular outer casing (3) is mounted in the bore of the building, the fan housing (2) can be moved if required so as to be flush with the wall of the building.

3. The tubular heat exchanger (1) of claim 1 or claim 2 wherein the mechanical joint (41) comprises a ball joint comprising a curved socket in which a curved ball is received.

4. The tubular heat exchanger (1) of claim 3 wherein the socket is defined by a curved concave inner surface (61) of the fan housing (2), the inner surface (61) extending about the longitudinal axis of the tubular heat exchanger (1), the curved ball being defined by a convex radially outer surface (55) of one end of the tubular outer casing (3).

5. The tubular heat exchanger (1) of claim 4 wherein the concave inner surface (61) and the convex outer surface (55) are curved in three dimensions, that is, about the longitudinal axis of the heat exchanger (1), and also about axes perpendicular to the longitudinal axis.

6. The tubular heat exchanger (1) of claim 4 or claim 5 wherein the concave inner surface (61) and the convex outer surface (55) each comprise part of a respective sphere.

7. The tubular heat exchanger (1) of any one of the preceding claims wherein a seal (63) is provided at the mechanical joint (41), the seal (63) being arranged to provide a fluid seal between the supply fluid channel and the exhaust fluid channel, at the mechanical joint (41).

8. The tubular heat exchanger (1) of claim 7 wherein the seal (63) comprises a first seal element mounted on the socket and a second seal element mounted on the ball of the mechanical ball joint (41).

9. The tubular heat exchanger (1) of claim 8 wherein each seal element comprises a respective sealing disc mounted on the ball and socket of the joint (41).

10. The tubular heat exchanger (1) of claim 8 or claim 9 wherein the first seal element comprises a concave curved profile that mates with a convex curved profile on the second seal element.

11. The tubular heat exchanger (1) of any one of claims 8 to 10 wherein each seal element is co-moulded with the joint (41) so as to be integral therewith.

12. The tubular heat exchanger (1) of any one of claim 8 to 10 wherein each seal element comprises a separate component subsequently mounted on the joint (41).

13. The tubular heat exchanger (1) of any one of the preceding claims wherein the end of the tubular outer casing (3) projects into the fan housing (2) which comprises a supply fluid chamber (7) axially spaced from an exhaust fluid chamber (5), the tubular outer casing (3) projecting through one chamber (5, 7) into the other (5,7), the seal (63) comprising a primary seal provided at the interface between the tubular outer casing (3) and both chambers (5, 7).

14. The tubular heat exchanger (1) of any one of claims 7 to 13 wherein the seal (63) further comprises a secondary seal provided at the interface between the tubular outer casing (3) and one chamber (5,7), the primary seal being spaced from the secondary seal along the longitudinal axis of the heat exchanger (1).

15. The tubular heat exchanger (1) of any one of the preceding claims wherein the impellers (29, 31) are mounted in the fan housing (2) such that their rotational axes are offset from the longitudinal axis of the outer tubular casing (3), when the heat exchanger (1) is viewed end on, that is, along its longitudinal axis.

16. The tubular heat exchanger (1) of any one of the preceding claims wherein at least one impeller (29, 31) overlaps the end of the outer tubular casing (3), when the heat exchanger (1) is viewed from the side.

17. The tubular heat exchanger (1) of any one of the preceding claims wherein the impellers (29, 31) are driven from a common motor (23) and share a common rotational axis, the motor (23) being mounted between the two impellers (29, 31) and comprising a drive shaft (25) that projects from each side of the motor (23), each impeller (29, 31) being mounted on respective sides of the drive shaft (25).

18. The tubular heat exchanger (1) of any one of the preceding claims wherein at least one impeller (29, 31) comprises a hollow hub (33, 35), the motor (23) being located within the hollow hub (33, 35) such that the blades of at least one impeller (29, 31) overlap the motor (23), when the heat exchanger (1) is viewed from the side.

19. The tubular heat exchanger (1) of any one of the preceding claims wherein each impeller (29, 31) comprises a radial impeller, each impeller (29, 31) comprising an axial inlet and a radial outlet.

20. The tubular heat exchanger (1) of any one of the preceding claims wherein the heat exchanger element (11) comprises an elongate heat exchanger tube extending through the interior of the tubular outer casing (3), the heat exchanger tube (11) comprising one of the supply fluid channel and an exhaust fluid channel.

21. The tubular heat exchanger (1) of claim 20 wherein a plurality of heat exchanger tubes (11) are provided.

22. The tubular heat exchanger (1) of claim 21 wherein the tubes (11) are arranged in a stacked formation.

23. The tubular heat exchanger (1) of claim 21 or claim 22 wherein the tubes (11) are thin walled ducts formed from a flexible plastics material.
